# EUROPÄISCHE PATENTSCHRIFT

(11) **EP 2 675 688 B1**
(45) Veröffentlichungstag und Bekanntmachung des Hinweises auf die Patenterteilung: **10.02.2016**
(21) Anmeldenummer: 12712921.1
(22) Anmeldetag: 10.02.2012
(51) Int. Cl.: B61C 15/14

(54) **VERFAHREN ZUM BETREIBEN EINES SCHIENENGEBUNDENEN FAHRZEUGES**
METHOD FOR OPERATING A RAIL VEHICLE
PROCÉDÉ DE FONCTIONNEMENT D'UN VÉHICULE FERROVIAIRE

(30) Priorität: 16.02.2011 DE 102011011443
(43) Veröffentlichungstag der Anmeldung: 25.12.2013
(73) Patentinhaber: Voith Patent GmbH, 89522 Heidenheim (DE)
(72) Erfinder: SCHWAB, Thomas, 89522 Heidenheim (DE)
(74) Vertreter: Dr. Weitzel & Partner
(86) Internationale Anmeldenummer: PCT/EP2012/000601
(87) Internationale Veröffentlichungsnummer: WO 2012/110216

(56) Entgegenhaltungen:
- DE-A1- 19 612 222
- DE-A1- 19 735 562
- DE-A1-102005 001 403
- DE-C1- 19 927 225
- FR-A1- 2 591 962
- US-A- 6 152 546
- US-A1- 2008 051 967

## Beschreibung

Die Erfindung betrifft ein Verfahren zum Betreiben eines schienengebundenen Fahrzeuges mit den Merkmalen im Oberbegriff von Anspruch 1.

Aus dem Bereich der Schienenfahrzeuge ist es bekannt, dass es bei Beschleunigungsvorgängen zu einem sogenannten Schleudern der angetriebenen Räder kommen kann. Unter dem Schleudern versteht der Fachmann für Schienenfahrzeuge dabei ein Durchdrehen der angetriebenen Räder beim Fahren oder Beschleunigen eines Schienenfahrzeuges. Die Ursache für dieses Schleudern liegt in der vergleichsweise geringen Reibung zwischen den metallischen Schienen und den typischerweise ebenfalls aus Metall ausgebildeten Rädern. Ein weiteres Phänomen, welches ebenfalls auf diese vergleichsweise geringe Reibung zurückzuführen ist, ist das sogenannte Gleiten beim Abbremsen eines Schienenfahrzeuges. Dabei kommt es zu einem kurzzeitigen Stillstand oder einer kurzzeitigen zu starken Verlangsamung der Geschwindigkeit der Räder beim Bremsen, so dass ein Schlupf zwischen den Rädern und der Schiene auftritt. Insbesondere dann, wenn es zu einem Stillstand der abgebremsten Räder kommt, wird durch das Gleiten im Allgemeinen die Oberfläche des Rades abgetragen, so dass es zu einer Unwucht und zu Problemen im Rundlauf des Rades kommt. Beim Schleudern liegt die Problematik dagegen eher darin, dass Antriebsenergie auf Grund der durchdrehenden Räder "verpufft", ohne dass diese für den gewünschten Vortrieb des schienengebundenen Fahrzeugs eingesetzt werden kann.

Beide Phänomene, sowohl das Gleiten als auch das Schleudern gilt es daher zu unterbinden. Um entsprechend auf die Antriebs- beziehungsweise Bremsleistung des schienengebundenen Fahrzeugs einwirken zu können, sind jedoch entsprechende Daten notwendig, sodass gemäß dem allgemeinen Stand der Technik die tatsächliche Geschwindigkeit des Fahrzeuges und damit die Sollgeschwindigkeit der Räder ermittelt werden kann. Wenn die tatsächliche Geschwindigkeit nun von dieser Sollgeschwindigkeit abweicht, dann liegt entweder ein Schleudern oder ein Gleiten vor. Problematisch ist dabei nun die Erfassung der tatsächlichen Geschwindigkeit, insbesondere dann, wenn alle Achsen beziehungsweise Räder eine Lokomotive angetrieben oder abgebremst sind, da dann alle Räder unter den Phänomenen leiden, und keine exakten Daten ermittelt werden können. Neben der Nutzung einer nicht angetriebenen Laufachse zur Erfassung der tatsächlichen Geschwindigkeit, was jedoch nur bei Triebwagen möglich ist, da Lokomotiven typischerweise über Antriebe an allen Achsen verfügen, sind gebräuchliche Methoden zur Erfassung der tatsächlichen Geschwindigkeit ein zum Beispiel ein Radarsensor, welcher den am schienengebundenen Fahrzeug vorbeiziehenden Boden erfasst, und daraus die tatsächliche Geschwindigkeit des Schienenfahrzeugs ermittelt. Der Nachteil bei derartigen Bodenradarsensoren liegt in den hohen Kosten und der Tatsache, dass diese nicht sonderlich zuverlässig arbeiten und somit für vergleichsweise viel Geld vergleichsweise schlechte Messwerte liefern. Eine Alternative hierzu stellt beispielsweise eine Geschwindigkeitserfassung über ein GPS-System dar. Diese Erfassung der tatsächlichen Geschwindigkeit über ein GPS-System hat dabei den Nachteil, dass die Qualität der Messung von der Anzahl der für den GPS-Sensor sichtbaren GPS-Satelliten abhängt. So ist beispielsweise die Qualität der Messung in Wäldern, tief eingeschnittenen Tälern und dergleichen häufig schlecht. In langen Tunneln, wie sie im Bahnbetrieb häufig vorkommen, ist eine Messung nicht möglich. Außerdem benötigt die Berechnung der Geschwindigkeit eine gewisse Zeit, sodass Geschwindigkeitsdaten, welche über ein GPS-System ermittelt worden sind, zum jeweils aktuellen Zeitpunkt noch vergleichsweise ungenau sind, da die Geschwindigkeitserfassung der tatsächlichen Geschwindigkeit im jeweiligen Zeitpunkt immer etwas "nachhinkt".

Als Beispiel für die beiden oben beschriebenen Methoden zur Verhinderung des Gleitens beziehungsweise Schleuderns über einen Vergleich der Geschwindigkeit der Räder mit der tatsächlichen Geschwindigkeit des Schienenfahrzeugs soll auf die Patentschrift US 7,467,830 B2 verwiesen werden. In der US 6,152,546 A wird aus einer solchen Geschwindigkeit zusätzlich die Beschleunigung abgeleitet und zur Steuerung verwendet.

Im Bezug auf Gleitvorgänge beim Abbremsen eines schienengebundenen Fahrzeugs kann außerdem anhand der bisherigen Geschwindigkeitsverläufe der Bremsung eine vermutete "tatsächliche" Geschwindigkeit abgeschätzt werden, in dem dieser Verlauf entsprechend hochgerechnet wird. Auch dieses System unterliegt einem Derating, das heißt die berechneten Daten weichen von den tatsächlichen Begebenheiten ab.

Es ist die Aufgabe der hier vorliegenden Erfindung, ein Verfahren zum Betreiben eines schienengebundenen Fahrzeuges zu schaffen, welches mit einfachen und kostengünstigen Mitteln in der Lage ist, die oben genannten Nachteile zu vermeiden sowie Schleuder- und Gleitvorgänge zu verhindern oder zumindest zu minimieren, und so eine verbesserte Nutzung der eingesetzten Antriebsenergie beziehungsweise eine materialschonende Bremsung eines solchen schienengebundenen Fahrzeuges zulässt.

Erfindungsgemäß wird diese Aufgabe durch das Verfahren mit den Merkmalen im kennzeichnenden Teil des Anspruchs 1 gelöst. Die abhängigen Ansprüche geben vorteilhafte Ausgestaltungen und Weiterbildungen des erfindungsgemäßen Verfahrens an.

Anstelle der im Stand der Technik verbreiteten Messung der Geschwindigkeit nutzt das erfindungsgemäße Verfahren die Messung von Beschleunigungen. Hierfür lässt sich in dem Fahrzeug ein Beschleunigungssensor installieren. Derartige Beschleunigungssensoren sind heute als einfache und vergleichsweise kostengünstige Bauteile mit sehr hochauflösender, exakter und schneller Messung verfügbar. Typischerweise erfolgt die Messung dabei in alle Raumrichtungen. Solche Beschleunigungssensoren beziehungsweise 3D-Beschleunigungssensoren werden typischerweise in der Fahrzeugindustrie eingesetzt, um sicherheitsrelevante Bauteile wie beispielsweise Airbags bei bestimmten Beschleunigungsgrenzwerten zu aktivieren oder um entsprechende beschleunigungsabhängige Steuerungen für Komfortfunktionen eines Fahrzeugs bereitzustellen. Einen solchen einfachen, kommerziell verfügbaren hochauflösenden Beschleunigungssensor nutzt das erfindungsgemäße Verfahren nun, um die Beschleunigung des Fahrzeugs an sich zu ermitteln. Die Beschleunigung kann dabei sowohl eine positive Beschleunigung als auch eine negative Beschleunigung (Verzögerung) sein. Ein Gleiten oder Schleudern der Räder bei dem Schienenfahrzeug wird typischerweise nur dann auftreten, wenn das Fahrzeug entweder beschleunigt oder abgebremst wird. Immer dann tritt im Fahrzeug auch eine entsprechende Beschleunigung auf, welche über den Beschleunigungssensor im Sinne der Erfindung erfasst werden kann.

Über Drehzahlsensoren an den Rädern, welche auch beim Stand der Technik bereits verwendet werden, lässt sich eine Drehzahländerung der Räder ermitteln. Auch ist es möglich, eine andere Größe, insbesondere Drehzahl im Drehgestell oder auch im Antriebsstrang, insbesondere an Ausgang eines Gangwechselgetriebes, zu erfassen, welche mit der Drehzahl der Räder korrespondiert. Hieraus kann dann die Drehzahländerung der Räder ermittelt werden. Die Drehzahländerung des wenigstens einen angetriebenen/gebremsten Rads ermöglicht dann das Ermitteln einer Beschleunigung dieses Rads. Der Beschleunigungswert dieses angetriebenen/gebremsten Rads lässt sich dann unmittelbar oder gegebenenfalls um einen Offset korrigiert mit dem Beschleunigungswert des erfindungsgemäß eingesetzten Beschleunigungssensors vergleichen.

Über eine Steuerung wird die Antriebsleistung und/oder Bremskraft entsprechend angepasst, wenn die Beschleunigung des angetriebenen/gebremsten Rads von der Beschleunigung des Fahrzeugs abweicht. Über die Anpassung der Antriebsleistung oder der Bremskraft, kann dann ein Schleudern oder Gleiten der Räder des schienengebundenen Fahrzeuges verhindert oder in jedem Fall zumindest deutlich verringert werden.

Dieses Verfahren ermöglicht es, extrem schnell auf ein Schleudern oder Gleiten der Räder zu reagieren. Sobald die Beschleunigung der Räder, beispielsweise ermittelt durch die Ableitung ihrer über die Drehzahl zu ermittelnden Umfangsgeschwindigkeit, von der Beschleunigung des Fahrzeugs abweicht, muss von einem Schleudern oder Gleiten der Räder ausgegangen werden. Zum Beispiel im Fall des Schleuderns kann die Leistung zum Antreiben des Fahrzeuges unmittelbar reduziert werden, um diesem Schleudern entgegenzuwirken. Diese Steuerung über die Beschleunigung hat den entscheidenden Vorteil, dass sie extrem schnell auf ein Auftreten des Schleudern oder Gleitens reagieren kann. Zeitverzögerungen, wie sie zum Erfassen von Geschwindigkeiten, beispielsweise über GPS, notwendig sind, treten hierbei nicht auf.

Bei dem erfindungsgemäßen Verfahren ist es nun vorzugsweise so, dass die Leistung zum Antreiben des Fahrzeugs oder die Kraft zum Bremsen des Fahrzeugs reduziert wird, wenn der Betrag der Beschleunigung des angetriebenen/gebremsten Rades größer als der Betrag der Beschleunigung des Fahrzeugs ist. Weichen die Werte der Beschleunigung des angetriebenen/gebremsten Rades von den Werten der Beschleunigung des Fahrzeugs ab, so liegt in jedem Fall ein Gleiten oder Schleudern vor. Je nachdem, ob ein Antriebsfall oder ein Bremsfall vorliegt, handelt es sich dabei um Schleudern oder Gleiten. Wenn die Beschleunigung beziehungsweise die Verzögerung des angetriebenen/gebremsten Rades, faktisch also der Betrag des Beschleunigungswerts, größer als der Betrag des Beschleunigungswerts des Fahrzeugs ist, muss entsprechend reagiert werden, indem die Antriebsleistung des Fahrzeugs reduziert oder die Kraft zum Bremsen des Fahrzeugs reduziert wird. Dem Schleudern beziehungsweise Gleiten wird so effektiv entgegengewirkt.

Gemäß einer besonders günstigen und vorteilhaften Weiterbildung des erfindungsgemäßen Verfahrens ist es dabei vorgesehen, dass diese Reduzierung der Leistung oder der Kraft mit einer Funktion über der Zeit, insbesondere einer linearen Funktion über der Zeit, erfolgt. Diese Vorgehensweise wirkt dem Schleudern beziehungsweise Gleiten sehr wirksam entgegen, da abrupte Änderungen der Leistung oder der Kraft vermieden und eine "sanfte" Anpassung, beispielsweise über eine lineare Rampe, der Leistung oder der Kraft vorgenommen wird.

Sobald keine Beschleunigungsdifferenz mehr vorliegt, die Räder also nicht mehr schleudern oder gleiten, kann die Leistung dann wieder auf den gewünschten Wert angehoben werden. Der Ablauf des Verfahrens kann dabei als Steuerung erfolgen, insbesondere wird er jedoch als Regelung ausgebildet sein, welche eine entsprechende Anpassung der Werte über einen aus der Beschleunigungsdifferenz kontinuierlich gebildeten Sollwert regelt.

Die Drehzahl des angetriebenen/gebremsten Rades kann typischerweise über einen Drehzahlsensor erfasst werden. Dieser kann vorzugsweise im Bereich des beziehungsweise der angetriebenen/gebremsten Räder direkt, oder an einer drehfest mit den Rädern verbundenen Achse beziehungsweise einer Achse der untereinander in einem Drehgestell verbundenen Räder angeordnet sein. Dies ermöglicht die bestmöglichste Messung der Beschleunigung des/der angetriebenen/gebremsten Räder und erlaubt es, das Verfahren somit sehr exakt auszuführen. Mit einem derartig angeordneten Sensor kann dabei auf Schleudern und Gleiten entsprechend reagiert werden.

In einer alternativen Ausgestaltung des erfindungsgemäßen Verfahrens kann es aber auch vorgesehen sein, dass der Drehzahlsensor im Bereich des Antriebsstrangs an einer Ausgangswelle eines Gangwechselgetriebes des Fahrzeugs angeordnet ist. Im Bereich der Ausgangswelle des Gangwechselgetriebes liegt im Antriebsfall typischerweise ebenfalls die Drehzahl des oder der angetriebenen/gebremsten Rades/Räder vor, da zwischen der Ausgangswelle des Gangwechselgetriebes und den Rädern typischerweise drehfeste Verbindungen mit fest vorgegebenen Übersetzungen, beispielsweise Differenziale, Wendegetriebe oder dergleichen, angeordnet sind. Die Drehzahl der Ausgangswelle des Gangwechselgetriebes kann also ebenfalls herangezogen werden, um hier eine Beschleunigung zu ermitteln und diese mit der Beschleunigung des Fahrzeugs zu vergleichen. Bei diesem Aufbau kann allerdings nur auf das Schleudern und nicht auf ein eventuelles Gleiten eingewirkt werden. Der Aufbau hat jedoch den Vorteil, dass dieser unabhängig von dem jeweils schienengebundenen Fahrzeug realisiert werden kann, sodass beispielsweise ein Antriebsstrang selbst, welcher für verschiedene Fahrzeuge eingesetzt werden kann, über den gesamten Aufbau und die gesamte Sensorik zum Verhindern eines Schleuderns verfügt. Dies ist hinsichtlich der Modularität von Systemen und der Möglichkeit, den Antriebsstrang in verschiedenen Schienenfahrzeugen einzusetzen, von besonderem Vorteil.

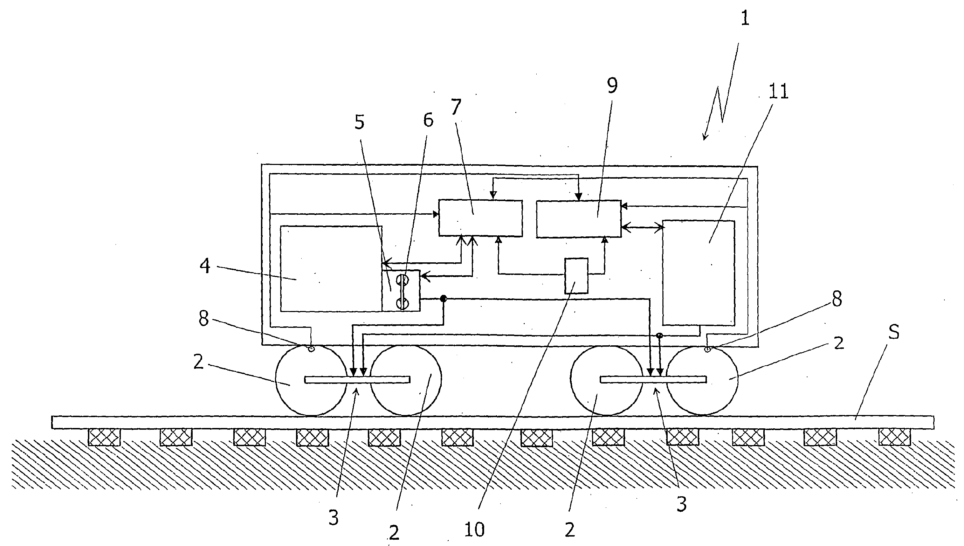

Weitere vorteilhafte Ausgestaltungen des erfindungsgemäßen Verfahrens ergeben sich aus den restlichen abhängigen Ansprüchen und werden anhand des Ausführungsbeispiels deutlich, welches nachfolgend unter Bezugnahme auf die Figur näher beschrieben wird.

Die einzige beigefügte Figur zeigt ein schematisch angedeutetes schienengebundenes Fahrzeug mit entsprechender Ausrüstung zur Durchführung des erfindungsgemäßen Verfahrens.

In der Darstellung der Figur ist ein angedeutetes schienengebundenes Fahrzeug 1 zu erkennen, welches mittels vier angetriebener Räder 2 auf je einem Drehgestell 3 angetrieben wird. Das Fahrzeug 1 wird also an allen Rädern 2, wobei hier nur eine Seite des Fahrzeugs prinzipmäßig dargestellt ist und damit vier der Räder 2 zu erkennen sind, angetrieben. Ebenso sollen alle verfügbaren Räder 2 des Fahrzeugs 1 beim Abbremsen gebremst werden. Das Fahrzeuges 1 kann auf einer angedeuteten Schiene S bewegt werden. Über ein Antriebsaggregat 4 und eine Getriebeeinheit 5 gelangt die Leistung zum Antreiben des Fahrzeuges 1 in den Bereich der Räder 2, was aus dem allgemeinen Stand der Technik bekannt und daher hier nur schematisch angedeutet ist. Das Antriebsaggregat 4 kann dabei ein beliebiges Antriebsaggregat 4, beispielsweise auf der Basis eines Verbrennungsmotors, einer dieselelektrischen Antriebseinheit, einer elektrischen Antriebseinheit oder dergleichen sein.

Für das hier dargestellte Ausführungsbeispiel soll das Antriebsaggregat 4 ein Dieselmotor sein, welcher über ein Gangwechselgetriebe, insbesondere ein Automätgetriebe als Getriebeeinheit 5 angetrieben wird. Die Getriebeeinheit 5 umfasst verschiedene Getriebebauteile, wie beispielsweise Planetengetriebe, Stirnradgetriebe oder dergleichen, sowie einen hydrodynamischen Wandler 6. Auch dieser Aufbau ist aus dem Stand der Technik bekannt, weshalb er hier nur schematisch angedeutet ist. Anstelle des hydrodynamischen Wandlers 6 könnte auch eine hydrodynamische Kupplung in dem Antriebsstrang eingesetzt werden. Ferner ist im Antriebsstrang eine Steuerung 7, in diesem Fall eine Traktionssteuerung zu erkennen, welche die Leistungsabgabe steuert beziehungsweise regelt. Die Traktionssteuerung 7 ist dabei mit jeweils einem symbolisch angedeuteten Drehzahlsensor 8 an einem der Räder 2 jedes Drehgestells 3 verbunden. Über diese Drehzahlsensoren 8 wird die Drehzahl der jeweiligen angetriebenen/gebremsten Räder 2 ermittelt. Da die Räder 2 innerhalb dieses Drehgestells 3 fest miteinander gekoppelt sind, reicht typischerweise einer der Drehzahlsensoren 8 für jedes der Drehgestelle 3 aus. Die Drehzahlsensoren 8 stehen außerdem mit einer Steuerung 9, in diesem Fall einer Bremssteuerung, in Verbindung. Über diese Bremssteuerung 9 wird die Bremskraft zum Abbremsen des Fahrzeuges 1 an den Rädern 2 entsprechend gesteuert.

Dieser bis hierher ausgeführte Aufbau ist aus dem allgemeinen Stand der Technik bekannt und so auch üblich, so dass hierauf nicht in allen Details eingegangen wird.

Das schienengebundene Fahrzeug 1 weist ferner einen Beschleunigungssensor 10 auf, welcher die Beschleunigung des Fahrzeugs 1 erfasst. Dieser Beschleunigungssensor kann insbesondere als 3D-Beschleunigungssensor 10 ausgebildet sein, wie er beispielsweise aus dem Bereich von Sicherheitssteuerungen bei Personenkraftwagen bekannt und üblich ist. Über diesen Beschleunigungssensor 10 lassen sich die am Fahrzeug 1 auftretenden positiven und negativen Beschleunigungen (Beschleunigungen und Verzögerungen) zeitnah und sehr exakt erfassen. Der tatsächliche Wert der Beschleunigung wird von dem Beschleunigungssensor 10 dann den Steuerungen 7, 9 zur Verfügung gestellt. Parallel dazu können die Traktionssteuerung 7 beziehungsweise die Bremssteuerung 9 anhand der Drehzahlsensoren 8 eine Drehzahl erfassen, welche aus welcher die Beschleunigung der angetriebenen beziehungsweise gebremsten Räder 2 ermittelt wird. In den Steuerungen 7, 9 werden nun die Beträge dieser beiden Beschleunigungswerte miteinander verglichen. Liefern die über die Drehzahlsensoren 8 ermittelten Werte eine größere Beschleunigung der angetriebenen Räder 2 als die Beschleunigung des Fahrzeugs 1, welche über en Beschleunigungssensor 10 erfasst wird, so drehen die angetriebenen Räder 2 im Vortriebsfall beziehungsweise Beschleunigungsfall gegenüber der Schiene 3 durch, und es tritt das sogenannte Schleudern auf. In diesem Fall reduziert sich die Zugkraft, und es tritt erhöhter Verschleiß an Rädern 2 und Schiene 3 auf. Das Schleudern der angetriebenen Räder 2 ist daher nicht gewollt.

Durch den Vergleich der beiden Beschleunigungen lässt sich ein solches Schleudern jedoch schon bei sehr geringem Schleudern extrem schnell sicher und zuverlässig detektieren. Die Traktionssteuerung 7, welche auch mit dem Antriebsaggregat 4 und der Getriebeeinheit 5 in Wirkverbindung steht, kann daraufhin die Antriebsleistung für das Fahrzeug 1 reduzieren, bis sich die Beschleunigungen wieder aneinander angleichen und der zulässige Schlupf erreicht wird. Damit kann durch einen Eingriff der Traktionssteuerung 7 auf das Antriebsaggregat 4 und/oder die Getriebeeinheit 5 dem Schleudern entgegengewirkt werden. Damit wird insgesamt die Ausnutzung der zum Antrieb benötigten und eingesetzten Energie verbessert, und der Verschleiß von Rädern 2 und Schiene 3 vermindert.

Zur Reduzierung der Antriebsleistung über die Traktionssteuerung 7 können nun verschiedene Wege beschritten werden. Besonders günstig und effizient ist es, wenn die Traktionssteuerung 7 die vom Antriebsaggregat 4 abgegebene Leistung in einer, insbesondere linearen, Funktion über der Zeit, beispielsweise in einer Rampe, entsprechend absenkt, um ein Schleudern der angetriebenen Räder 2 zu verhindern. Nachdem der zulässige Schlupf erreicht wird, wird die Leistung des Antriebsaggregats 4 ebenso über eine Funktion über der Zeit, beispielsweise also auch eine Rampe, wieder auf den gewünschten Leistungswert erhöht. Um entsprechend schnell reagieren zu können, kann über die Traktionssteuerung 7 außerdem die Getriebeeinheit 5 entsprechend beeinflusst werden, um den Leistungsfluss vom Antriebsaggregat 4 zu den angetriebenen Rädern 2 zu reduzieren. Im Allgemeinen werden derartige Getriebeeinheiten 5 ein hydrodynamisches Element also beispielsweise eine hydrodynamische Kupplung oder, wie hier beschrieben, einen hydrodynamischen Wandler 6 aufweisen. Durch ein Entleeren des hydrodynamischen Wandlers 6, also ein Ablassen des Arbeitsmediums in dem hydrodynamischen Wandler 6 kann sehr schnell eine Reduzierung der Antriebsleistung an den angetriebenen Rädern 2 realisiert werden, um so das Schleudern der angetriebenen Räder 2 zu verringern beziehungsweise zu verhindern.

In idealer Weise kann sehr schnell durch ein Entleeren des hydrodynamischen Wandlers 6 erreicht werden, dass die Antriebsleistung entsprechend reduziert wird, insbesondere bis das Schleudern aufhört, also die Beschleunigungen sich angeglichen haben. Parallel dazu kann die Leistung des Antriebsaggregats 4 reduziert werden, was typischerweise etwas langsamer erfolgen wird als das Entleeren des hydrodynamischen Wandlers 6. Nachdem das Schleudern aufgehört hat, kann der hydrodynamische Wandler 6 wieder befüllt und die Leistung des Antriebsaggregates 4, idealerweise über eine Rampe, wieder gesteigert werden, bis die gewünschte Leistung erreicht ist.

Neben dem Einsatz des hier beschriebenen Verfahrens zum Verhindern beziehungsweise Verringern des Schleuderns kann das Verfahren auch eingesetzt werden, um Gleiten beim Abbremsen des Fahrzeuges 1 zu verhindern oder zumindest zu minimieren. Hierfür ist in der Darstellung in der Figur die unabhängig von der Traktionssteuerung 7 dargestellte Bremssteuerung 9 eingezeichnet. In der Praxis können diese Steuerungen 7, 9 in einen Aufbau integriert sein. Über die Bremssteuerung 9 soll die Bremskraft, welche zum Abbremsen der Räder 2 auf diese wirkt, entsprechend beeinflusst werden. Bei Schienenfahrzeugen werden zum Abbremsen typischerweise verschleißfreie Dauerbremsen, Reibbremsen oder auch das Abbremsen über eine Einspeisung von Energie, welche beispielsweise über einen Generator oder ein hydraulisches Aggregat generiert wird, in einen Speicher oder im Falle einer elektrisch betriebenen Lok in das elektrische Netz, genutzt. Unabhängig davon, wie die Kraft zum Bremsen erzeugt wird, soll die Bremssteuerung 9 die aufgebrachte Bremskraft auf die Räder 2 entsprechend beeinflussen. Da die Art und Weise, wie das Fahrzeug 1 abgebremst wird, nicht Gegenstand der hier vorliegenden Erfindung ist und für die hier vorliegende Erfindung nicht weiter relevant ist, ist der Leistungsfluss beim Bremsen lediglich über eine symbolische Bremseinheit 11, welche jeweils mit den den gebremsten Rädern 2 verbunden ist, symbolisiert. Die Bremseinrichtung 11 kann dabei beliebige Mittel zum Abbremsen mit oder ohne Rückgewinnung von Energie umfassen.

Die Bremssteuerung 9 steuert nun diese Bremseinrichtung 11 in der Art, dass die Bremskraft an den Rädern 2 entsprechend beeinflussbar ist. Nun kommt wieder die tatsächliche gemessene Beschleunigung des Fahrzeugs 1 aus dem Beschleunigungssensor 10 zum Einsatz, welche auch der Bremssteuerung 9 zugeleitet wird. Die Bremssteuerung 9 verfügt außerdem über die Daten von den Drehzahlsensoren 8, kann also die Beschleunigung der Räder 2 anhand der Drehzahlsensoren 8 ermitteln. Kommt es nun zu einer Abweichung dieser beiden Beschleunigungen voneinander im Bremsfall des Fahrzeugs 1, so wird typischerweise ein Gleiten vorliegen, bei dem die Räder 2 also teilweise blockieren. Wenn es im Extremfall zu einem vollständigen blockieren des Rades 2 kommen würde, wäre sofort ein Schaden durch eine Flachstelle an dem Rad 2 zu erwarten. Es gilt also beim Abbremsen des Fahrzeugs 1 dieses Gleiten zu vermeiden. Anhand des erfassten Beschleunigungsunterschieds ist dies nun insofern möglich, als sich das Gleiten erfassen lässt. Immer wenn die Verzögerung der Räder 2 niedriger ist als die tatsächliche Verzögerung des Fahrzeugs 1 beziehungsweise der Betrag der Verzögerung der Räder 2 höher ist als der Betrag der tatsächlichen Verzögerung des Fahrzeugs 1, liegt ein Gleiten vor. Aufgrund der sehr genauen Messwerte aus dem Beschleunigungssensor 10 können bereits geringfügige Gleitvorgänge erkannt werden und es kann dem Gleiten entgegengewirkt werden, indem die Bremssteuerung 9 die Bremskraft entsprechend reduziert, bis das Gleiten aufhört, der Beschleunigungsunterschied also verschwunden ist.

Das beschriebene Verfahren lässt sich insbesondere an Lokomotiven einsetzten, bei denen, wie hier dargestellt, alle Räder 2 angetrieben sind. Grundsätzlich ist es jedoch auch dann verwendbar, wenn nicht alle Räder 2 angetrieben sind, sondern das schienengebundene Fahrzeug 1 über angetriebene und nicht angetriebene Achsen verfügt, wie beispielsweise bei einem Triebwagen. Die Erfindung ist also bei allen Schienenfahrzeugen, Personen- und Güterwagen einsetzbar.

Selbstverständlich wäre es auch denkbar, den Beschleunigungswert des Beschleunigungssensors 10 rechnerisch in einen Geschwindigkeitswert umzuwandeln und diesen dann mit einem Geschwindigkeitswert der Räder 2, welcher aus der Drehzahl der Räder 2 ermittelt werden kann, zu vergleichen. Das Prinzip der Erfindung würde auch bei einem derartigen Vergleich von Geschwindigkeiten analog funktionieren.

## Patentansprüche

1. Verfahren zum Betreiben eines schienengebundenen Fahrzeuges (1)
1.1 mit mehreren Rädern (2);
1.2 mit wenigstens einem angetriebenen/gebremsten Rad (2), auf welches eine Leistung zum Antreiben oder Bremsen des Fahrzeuges (1) aufgebracht wird; wobei
1.3 eine Drehzahländerung des angetriebenen/gebremsten Rads (2) zumindest mittelbar erfasst wird; und
1.4 mit einer Steuerung zur Beeinflussung der Leistung zum Antreiben oder Kraft zum Bremsen des Fahrzeuges (1);
**dadurch gekennzeichnet, dass**
1.5 das Fahrzeug (1) einen Beschleunigungssensor (10) aufweist, über welchen eine Beschleunigung des Fahrzeugs erfasst wird;
1.6 aus einer Drehzahländerung des angetriebenen/gebremsten Rads (2) eine Beschleunigung des angetriebenen/gebremsten Rads (2) ermittelt wird; und
1.7 die Steuerung die Leistung und/oder Kraft anpasst, wenn die Beschleunigung des angetriebenen/gebremsten Rads (2) von der Beschleunigung des Fahrzeugs (1) abweicht.

2. Verfahren nach Anspruch 1, **dadurch gekennzeichnet, dass** die Leistung zum Antreiben des Fahrzeuges (1) oder die Kraft zum Bremsen des Fahrzeuges (1) reduziert wird, wenn der Betrag der Beschleunigung des angetriebenen/gebremsten Rads (2) größer als der Betrag der Beschleunigung des Fahrzeugs (1) ist.

3. Verfahren nach Anspruch 2, **dadurch gekennzeichnet, dass** die Reduzierung der Leistung oder der Kraft mit einer Funktion, insbesondere einer linearen Funktion, über der Zeit erfolgt.

4. Verfahren nach Anspruch 2 oder 3, **dadurch gekennzeichnet, dass** die reduzierte Leistung zum Antreiben des Fahrzeuges (1) oder die reduzierte Kraft zum Bremsen des Fahrzeugs (1) wieder gesteigert wird, wenn die Differenz der Beschleunigungen kleiner wird.

5. Verfahren nach einem der Ansprüche 1 bis 4, **dadurch gekennzeichnet, dass** bei dem Fahrzeug (1) auf alle Räder (2) Leistung zum Antreiben des Fahrzeuges (1) und/oder Kraft zum Bremsen des Fahrzeugs aufgebracht wird.

6. Verfahren nach einem der Ansprüche 1 bis 5, **dadurch gekennzeichnet, dass** als Beschleunigungssensor (10) in dem Fahrzeug (1) ein Sensor zum Erfassen der Beschleunigung in drei Raumrichtungen eingesetzt wird.

7. Verfahren nach einem der Ansprüche 1 bis 6, **dadurch gekennzeichnet, dass** die Drehzahländerung des wenigstens einen angetriebenen/gebremsten Rads (2) anhand eines Drehzahlsensors (8) erfasst wird.

8. Verfahren nach Anspruch 7, **dadurch gekennzeichnet, dass** der Drehzahlsensor (8) an dem wenigstens einen angetriebenen/gebremsten Rad (2) des Fahrzeugs (1), an einer dieses Rad (2) tragenden Achse oder an einer Achse eines dieses Rad (2) tragenden Drehgestells angeordnet ist.

9. Verfahren nach Anspruch 7, **dadurch gekennzeichnet, dass** der Drehzahlsensor (8) an einer Ausgangswelle eines Gangwechselgetriebes (5) des Fahrzeugs (1) angeordnet ist.

## Claims

1. Method for operating a rail vehicle (1)
1.1 having a plurality of wheels (2);
1.2 comprising at least one driven/braked wheel (2) to which power is applied for driving or braking the vehicle (1); wherein
1.3 a change of rational speed of the driven/braked wheel (2) is at least indirectly detected; and
1.4 comprising a control system for influencing the power for the driving or the force for braking the vehicle (1);
**characterized in that**
1.5 the vehicle (1) has an acceleration sensor (10) by means of which an acceleration of the vehicle is detected;
1.6 an acceleration of the driven/braked wheel (2) is determined from a change of rational speed of the driven/braked wheel (2); and
1.7 the control system adapts the power and/or force when the acceleration of the driven/braked wheel (2) deviates from the acceleration of the vehicle (1).

2. The method according to claim 1, **characterized in that** the power for driving the vehicle (1) or the force for braking the vehicle (1) is reduced when the magnitude of the acceleration of the driven/braked wheel (2) is greater than the magnitude of the acceleration of the vehicle (1).

3. The method according to claim 2, **characterized in that** the reduction of the power or the force takes place with a function, in particular a linear function, over time.

4. The method according to claim 2 or 3, **characterized in that** the reduced power for driving the vehicle (1) or the reduced force for braking the vehicle (1) is increased again when the difference between the accelerations becomes smaller.

5. The method according to any one of claims 1 to 4, **characterized in that** in the vehicle (1) power for driving the vehicle (1) and/or force for braking the vehicle (1) is applied to all the wheels (2).

6. The method according to any one of claims 1 to 5, **characterized in that** a sensor for detecting the acceleration in three spatial directions is used as acceleration sensor (10) in the vehicle (1).

7. The method according to any one of claims 1 to 6, **characterized in that** the change in rational speed of the at least one driven/braked wheel (2) is detected by means of a speed sensor (8).

8. The method according to claim 7, **characterized in that** the speed sensor (8) is disposed on the at least one driven/braked wheel (2) of the vehicle (1), on an axle carrying this wheel (2) or on an axle of a bogie carrying this wheel (2).

9. The method according to claim 7, **characterized in that** the speed sensor (8) is disposed on an output shaft of a gear change transmission (5) of the vehicle (1).

## Revendications

1. Procédé destiné à faire fonctionner un véhicule sur rail (1)
1.1 comprenant plusieurs roues (2) ;
1.2 comprenant au moins une roue entraînée/freinée (2), sur laquelle une puissance destinée à entraîner ou freiner le véhicule (1) est appliquée ;
1.3 un changement de vitesse de la roue entraînée/freinée (2) étant au moins détecté indirectement ; et
1.4 comprenant une commande destinée à influer sur la puissance destinée à entraîner ou la force destinée à freiner le véhicule (1);
**caractérisé en ce que**
1.5 le véhicule (1) présente un capteur d'accélération (10) via lequel une accélération du véhicule est détectée ;
1.6 **en ce qu'**une accélération de la roue entraînée/freinée (2) est déterminée à partir d'un changement de vitesse de la roue entraînée/freinée (2) ;
et
1.7 **en ce que** la commande adapte la puissance et/ou la force si l'accélération de la roue (2) entraînée/freinée diffère de l'accélération du véhicule (1).

2. Procédé selon la revendication 1, **caractérisé en ce que** la puissance destinée à entraîner le véhicule (1) ou la force destinée à freiner le véhicule (1) est réduite si la valeur absolue de l'accélération de la roue (2) entraînée/freinée est supérieure à la valeur absolue de l'accélération du véhicule (1).

3. Procédé selon la revendication 2, **caractérisé en ce que** la réduction de la puissance ou de la force se fait avec une fonction, en particulier une fonction linéaire, par rapport au temps.

4. Procédé selon la revendication 2 ou 3, **caractérisé en ce que** la puissance réduite destinée à entraîner le véhicule (1) ou la force réduite destinée à freiner le véhicule (1) est augmentée à nouveau si la différence des accélérations devient inférieure.

5. Procédé selon l'une quelconque des revendications 1 à 4, **caractérisé en ce que**, dans le cas du véhicule (1), une puissance destinée à entraîner le véhicule (1) et/ou de la force destinée à freiner le véhicule (1) est appliquée sur l'ensemble des roues (2).

6. Procédé selon l'une quelconque des revendications 1 à 5, **caractérisé en ce qu'**un capteur destiné à détecter l'accélération dans trois directions spatiales est utilisé en tant que capteur d'accélération (10) dans le véhicule (1).

7. Procédé selon l'une quelconque des revendications 1 à 6, **caractérisé en ce que** le changement de vitesse de la au moins une roue (2) entraînée/freinée est détecté au moyen d'un capteur de vitesse (8).

8. Procédé selon la revendication 7, **caractérisé en ce que** le capteur de vitesse (8) est agencé au niveau de la au moins une roue (2) entraînée/freinée du véhicule (1), au niveau d'un axe portant cette roue (2) ou au niveau d'un axe d'un boggie portant cette roue (2).

9. Procédé selon la revendication 7, **caractérisé en ce que** le capteur de vitesse (8) est agencé au niveau d'un arbre de sortie d'une boîte de changement de vitesse (5) du véhicule
